# EUROPÄISCHE PATENTSCHRIFT

(11) **EP 2 973 152 B1**
(45) Veröffentlichungstag und Bekanntmachung des Hinweises auf die Patenterteilung: **29.08.2018**
(21) Anmeldenummer: 15713870.2
(22) Anmeldetag: 27.03.2015
(51) Int. Cl.: G06F 17/30, G06F 21/10, G06F 21/62

(54) **VERFAHREN ZUR ZERSTÖRUNG VON DATEIINHALTEN**
METHOD FOR DESTROYING DATA CONTENTS
PROCÉDÉ DE DESTRUCTION DU CONTENU D'UN FICHIER

(30) Priorität: 10.04.2014 DE 102014105116
(43) Veröffentlichungstag der Anmeldung: 20.01.2016
(73) Patentinhaber: Fujitsu Technology Solutions Intellectual Property GmbH, 80807 München (DE)
(72) Erfinder: HÖHNKE, Thorsten, 86343 Königsbrunn (DE)
(74) Vertreter: Epping - Hermann - Fischer
(86) Internationale Anmeldenummer: PCT/EP2015/056759
(87) Internationale Veröffentlichungsnummer: WO 2015/155037

(56) Entgegenhaltungen:
- EP-A2- 0 999 488
- WO-A1-98/58321
- US-A1- 2009 007 227

## Beschreibung

Die Erfindung betrifft ein Verfahren zur Zerstörung von Dateiinhalten einer Datei.

Sicherheitsrelevante Daten, die in Dateien gespeichert werden, sollen in der Regel vor unberechtigtem Zugriff geschützt werden. Hierzu lassen sich üblicherweise Verschlüsselungen verwenden, die beispielsweise durch ein Passwort geschützt sind. Berechtigte Benutzer können ein Passwort eingeben, um die Datei zu öffnen. Hierbei ist jedoch nicht sichergestellt, dass nach einem Löschen nicht weitere Kopien existieren. Auch lässt sich durch ein derartiges Verfahren nicht verhindern, dass berechtigte Benutzer, die beispielsweise erpresst werden, die Datei an unberechtigte Dritte versenden.

Die WO 98/58321 A1 beschreibt ein selbstzerstörendes Dokument oder E-Mail-Nachrichtensystem, das durch Anhängen eines Makros oder Virus an das Dokument oder eine E-Mail-Nachricht das Dokument oder die E-Mail-Nachricht automatisch zu einem vorbestimmten Zeitpunkt zerstören kann. Ein Makro wird erstellt und an die Datei angehängt, genau dann, wenn die E-Mail-Nachricht oder das Dokument erstellt wird. Das Makro enthält ein teilausführbaren Code oder ein ausführbares Programm, das den Computer anweist, die Datei, an die das Virus angehängt ist, zu einem vorbestimmten Zeitraum zu überschreiben oder zu löschen.

Aufgabe der Erfindung ist es, ein Verfahren zu schaffen, um die Sicherheit von Dateien zu erhöhen.

Die Aufgabe wird durch ein Verfahren zur Zerstörung von Dateiinhalten in einer Datei gelöst. Das Verfahren umfasst hierbei die Schritte:
- Speichern der Datei in einem vorbestimmten Dateiformat;
- Integrieren eines Algorithmus in die Datei, zur Zerstörung von Dateiinhalten, aufweisend vorbestimmte Auslösekriterien, wobei ein erster Teil des Algorithmus in einen ersten Teil der Datei integriert, der beim Öffnen der Datei von einem ausführenden Betriebssystem oder von einem ausführenden Programm angesprochen wird;
- Prüfung der vorbestimmten Auslösekriterien, wenn die Datei geöffnet wird; und
- Zerstören von Dateiinhalten, wenn wenigstens ein vorbestimmtes Auslösekriterium erfüllt ist
- Verändern des integrierten Algorithmus, wenn die vorbestimmten Auslösekriterien nicht erfüllt sind.

Das Verändern des integrierten Algorithmus umfasst eine Veränderung in der Speicherstruktur des integrierten Algorithmus, sodass dieser nach dem Öffnen der Datei verändert vorliegt und nicht wie vorher erkannt werden kann.

Dadurch, dass bei jedem Öffnen ein Auslösekriterium geprüft wird, ist sichergestellt, dass die Datei nicht geöffnet werden kann, ohne eine Prüfung der Auslösekriterien durchzuführen. Ist ein Auslösekriterium erfüllt, so werden Dateiinhalte zerstört. Dies verhindert effektiv, dass die Datei verwendet werden kann.

Das Verändern des Algorithmus umfasst ebenso ein Speichern des veränderten Algorithmus in der Datei. Durch das Verändern des integrierten Algorithmus, einem sogenannten polymorphen Algorithmus, werden mehrere Vorteile realisiert. Zum einen kann der Algorithmus zur Prüfung der vorbestimmten Auslösekriterien relevante Daten aktualisieren und speichern. Somit kann der integrierten Algorithmus bei jedem Öffnen prüfen, ob die vorbestimmten Auslösekriterien erfüllt sind, abhängig von den gespeicherten Daten. Darüber hinaus ist es möglich, dass der Algorithmus sich derart verändert, dass es einem unberechtigten Benutzer erschwert wird, den integrierten Algorithmus zu löschen oder zu verändern.

Durch das integrieren des ersten Teils des Algorithmus in den ersten Teil der Datei wird sichergestellt, dass der Algorithmus ausgeführt wird, wenn die Datei geöffnet wird. Bei dem ersten Teil der Datei kann es sich um einen sogenannten "pre-execution header" handeln. Dieser kann betriebssystemunabhängig zu Beginn eines Öffnens einer Datei ausgeführt werden.

Gemäß einer vorteilhaften Ausgestaltung umfassen die vorbestimmten Auslösekriterien eine Prüfung eines oder mehrerer der folgenden Parameter: Datum; Zeitzone; Regionaldaten; Marke eines Geräts, auf dem die Datei geöffnet wird; Seriennummer eines Geräts, auf dem die Datei geöffnet wird; Zeitpunkt nach Öffnen der Datei; Kennung eines Benutzers eines Geräts, auf dem die Datei geöffnet wird.

Durch das Prüfen des Datums lässt sich die Datei nach einem bestimmten Zeitraum zerstören. Durch das Prüfen der Zeitzone, beziehungsweise der Regionaldaten kann sichergestellt werden, dass die Datei nur von Benutzern in einer bestimmten Region oder Zeitzone gelesen werden kann. Beispielsweise wird der integrierte Algorithmus dann ausgelöst, um die Dateiinhalte zu zerstören, wenn die Datei von einem Benutzer aus Europa nach USA gesendet wird. Hierzu prüft der Algorithmus beispielsweise eine Systemzeitzone eines Betriebssystems und oder eine Ländereinstellung. Wird die Datei in den USA nun geöffnet, so erkennt der integrierte Algorithmus die veränderte Zeitzone beziehungsweise das unterschiedliche Land und führt den Schritt der Zerstörung von Dateiinhalten aus. Auf diese Weise lässt sich die Datei ebenso auf bestimmte Benutzer oder Geräte einschränken. Beispielsweise durch die Seriennummer eines Geräts.

Gemäß einer vorteilhaften Ausgestaltung umfasst das Zerstören von Dateiinhalten ein Verändern von Bits eines Codes der Datei. Hierdurch wird sichergestellt, dass nicht nur in übergeordnetem Maße die Datei verändert oder gelöscht wird. Durch das Verändern einzelner Bits des Codes der Datei ist auf niedrigster Ebene sichergestellt, dass die Datei verändert wurde. Ist die Veränderung der Bits groß genug, beziehungsweise werden ausreichend viele Bits der Datei verändert, so ist die Datei zerstört.

Gemäß einer weiteren vorteilhaften Ausgestaltung basiert das Zerstören von Dateiinhalten auf einem Zufallsalgorithmus, wobei die Zerstörung irreversibel ist. Hierdurch ist sichergestellt, dass ein Benutzer, der die Datei wiederherstellen will, aus einem eventuellen Auslesen des integrierten Algorithmus keine inverse Regel aufstellen kann, um die Veränderung der Dateiinhalte rückgängig zu machen.

Gemäß einer weiteren vorteilhaften Ausgestaltung wird im Schritt des Zerstörens von Dateiinhalten ein informationsbehafteter Teil des Codes zerstört, so dass ein Informationsgehalt der Datei vernichtet wird.

Da Dateien häufig aus verschiedenen Dateisegmenten aufgebaut sind, wie zum Beispiel in sogenannten Container-Dateien, ist es nicht zwingend notwendig, alle Teile des Codes der Datei zu zerstören um die Datei für einen Benutzer unbrauchbar, bzw. unlesbar zu machen. Daher kann das Zerstören von Dateiinhalten auf diejenigen Teile des Codes der Datei beschränkt werden, der Informationen speichert. Informationen in diesem Sinne umfassen Informationen, aus denen Rückschlüsse auf Inhalte der Datei erkennbar sind.

Gemäß einer weiteren vorteilhaften Ausgestaltung ist ein zweiter Teil des Algorithmus in einem zweiten Teil der Datei integriert und kann von dem ersten Teil des Algorithmus aufgerufen werden. Der Algorithmus kann hierbei eine bestimmte Größe und einen bestimmten Speicherbedarf überschreiten, der für den ersten Teil der Datei zu groß wäre. Hierdurch kann sichergestellt werden, dass der Algorithmus Daten speichern und/oder verändern kann, ohne dass die Funktionalität der Datei angegriffen wird. Der erste Teil des Algorithmus kann den im zweiten Teil der Datei gespeicherten zweiten Teil des Algorithmus aufrufen.

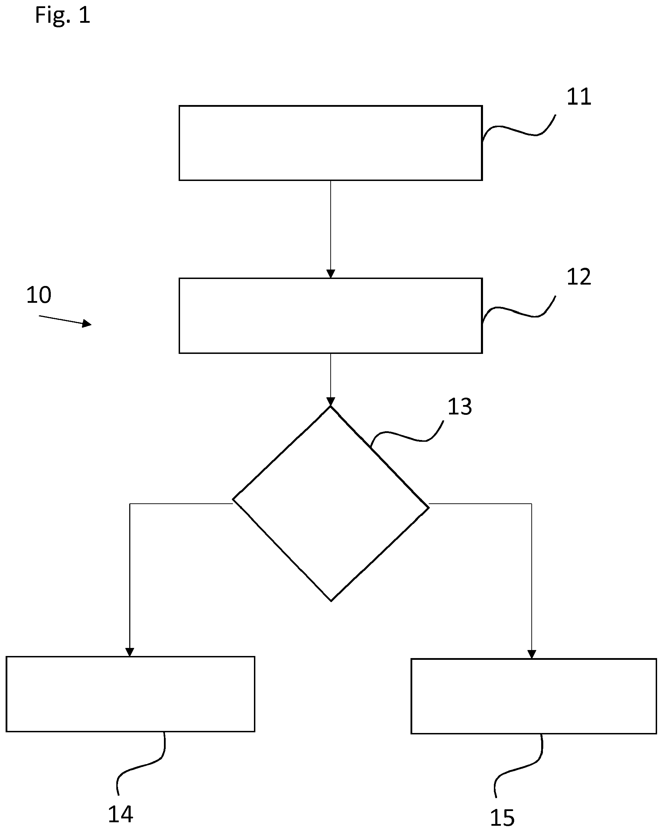

Die Erfindung wird im Folgenden anhand von Ausführungsbeispielen und Figur 1 näher erläutert.
- Figur 1: zeigt ein Flussdiagramm gemäß einer Ausgestaltung des Verfahrens.

Figur 1 zeigt ein Flussdiagramm 10. In Schritt 11 des Flussdiagramms 10 wird die Datei gespeichert. Hierbei kann es sich um eine Textdatei handeln, die beispielsweise in einem Dateiformat eines Textverarbeitungsprogramms gespeichert wird, wie beispielsweise .doc oder .docx. Es ist jedoch genauso möglich, dass es sich hierbei um .pdf-Dateien oder andere Dateien handelt.

In Schritt 12 wird nun ein Algorithmus zur Zerstörung von Dateiinhalten integriert. Die Integrierung des Algorithmus zur Zerstörung von Dateiinhalten kann hierbei durch ein speziell hierfür entwickeltes Computerprogramm ausgeführt werden. Es ist jedoch ebenso denkbar, dass die Integrierung des Algorithmus zur Zerstörung von Dateiinhalten durch das gleiche Programm ausgeführt wird, das die Datei im Schritt 11 erstellt. Bei der Integration wird ein erster Teil des Algorithmus in einen ersten Teil der Datei geschrieben. Der erste Teil der Datei ist der sogenannte pre-execution header. Beispielsweise öffnen Programme unter den Betriebssystemen Unix, Linux, Microsoft Windows, iOS Dateien mit dem pre-execution Header. Somit ist die Integrierung des Algorithmus in der Datei betriebssystemunabhängig. Der pre-execution header wird beim Öffnen der Datei von die Datei auslesenden Programmen zu Beginn des Öffnens angesprochen. Da dieser erste Teil der Datei nur einen begrenzten Speicherumfang aufweist, kann nicht der gesamte Code des Algorithmus in diesem integriert werden. Es wird ein erster Teil des Algorithmus in des ersten Teil der Datei integriert, der dazu dient, einen zweiten Teil des Algorithmus, aufzurufen, der in einem Teil der Datei gespeichert wird, dessen Speicherumfang nicht so stark begrenzt ist. So ist sichergestellt, dass der pre-execution header eine beschränkende Speichergröße nicht überschreitet.

In einer alternativen Ausgestaltung fallen der Schritt 11 und der Schritt 12, das Speichern und das Integrieren zusammen. Hierbei wird beim Speichern der Datei der Algorithmus zur Zerstörung von Dateiinhalten in die Datei integriert. Die Integration des Algorithmus findet hierbei ebenso wie zu Schritt 12 beschrieben in zwei Teilen statt.

Selbstverständlich ist die Aufteilung des Algorithmus auf zwei Teile nicht beschränkend für die Ausführung der Erfindung. In anderen Ausführungen kann der Algorithmus unaufgeteilt integriert werden (wenn das verwendete Dateiformat keine Beschränkung der Speichergröße aufweist oder der Code des Algorithmus klein genug ist, diesen nicht zu überschreiten), oder aber in mehrere Teile aufgeteilt werden, die entsprechend aufgerufen werden. Hierbei ist der Algorithmus vor einer Entdeckung zusätzlich geschützt.

Wird die Datei von einem Programm geöffnet, so wird automatisch der Schritt 13 ausgeführt. Beim Öffnen der Datei wird als erstes der pre-execution header ausgeführt. In Schritt 13 wird im ersten Teil des Algorithmus ein Aufruf auf den zweiten Teil des Algorithmus ausgeführt.

Durch das Öffnen der Datei und das Ausführen des Schritts 13 wird automatisch die Prüfung der vorbestimmten Auslösekriterien ausgelöst. Der integrierte Algorithmus weist vorbestimmte Auslösekriterien auf. Als Parameter werden im Ausführungsbeispiel ein Datum sowie eine Zeitzone verwendet. Das Datum wird hierbei von einem Benutzer so gewählt, dass es sechs Monate nach dem Erstellen der Datei gelegen ist. Im Ausführungsbeispiel wird die Zeitzone von Berlin verwendet. In alternativen Ausgestaltungen können andere Parameter als Auslösekriterium geprüft werden. Beispielsweise wird als Auslösekriterium eine Seriennummer eines Geräts geprüft. Sobald eine andere Seriennummer erkannt wird, wird der Schritt 14 ausgeführt. In einer weiteren alternativen oder zusätzlichen Ausgestaltung wird als Auslösekriterium ein Zeitpunkt nach einem Öffnen der Datei geprüft. So ruft der integrierte Algorithmus nach beispielsweise 20 Sekunden nach Öffnen der Datei Schritt 14 auf und zerstört somit Dateiinhalte. Wird hierbei erkannt, dass die vorbestimmten Auslösekriterien erfüllt sind, so wird im Folgenden Schritt 14 ausgeführt. Der Algorithmus wird anhand der vorbestimmten Auslösekriterien so eingestellt, dass der Schritt 14 ausgeführt wird, wenn entweder das eingestellte Datum erreicht oder die eingestellte Zeitzone verlassen wird. Im Allgemeinen können als Auslösekriterien diverse Parameterprüfungen miteinander verknüpft werden. Das zerstören der Dateiinhalte weist einen vorbestimmten Umfang auf.

Im Ausführungsbeispiel werden in Schritt 14 Dateiinhalte zerstört. Hierbei wird ein Zufallsalgorithmus ausgeführt, der einzelne Bits der Datei verändert. Dadurch, dass der Algorithmus zum Zerstören der Dateiinhalte auf einem Zufall basiert, ist er nicht reversibel. Dateien bestehen grundsätzlich aus Code, der auf binärer Ebene als Bits gespeichert ist. Durch das Verändern einzelner Bits des Codes der Datei bleibt die Datei erhalten, kann aber nicht weiter verwendet werden. Die veränderten Dateistrukturen sind somit unwiederbringlich verloren.

Die Zerstörung der Dateistrukturen ist im Ausführungsbeispiel so groß, dass die Datei nicht weiter genutzt werden kann. In einer alternativen Ausgestaltung ist die Zerstörung der Dateistrukturen geringer, so dass die Datei weiter von einem Benutzer verwendet werden kann und erst nach einer vorbestimmten Anzahl erfüllter Auslösekriterien beim Öffnen der Datei unbrauchbar wird. Beispielsweise verändert hierzu der Algorithmus lediglich Code in einem bestimmten Dateibereich. Alternativ oder zusätzlich ist die Veränderung auf eine vorbestimmte Anzahl einzelner Teilveränderungen begrenzt. Beispielsweise verändert der Algorithmus lediglich 1000 einzelne Bits bei jeder Ausführung des Schritts 14.

Wird im Schritt 13 kein vorbestimmtes Auslösekriterium erkannt, so verändert sich der Algorithmus im Schritt 15. Der Algorithmus ist somit ein polymorpher Algorithmus. Zusätzlich oder alternativ verändert sich der Algorithmus, wenn lediglich einzelne Auslösekriterien erkannt werden. Eine Veränderung kann hierbei eine Aktualisierung einer Zeitzone, eines Datums oder eine Seriennummer umfassen. Ebenso kann eine Veränderung des Algorithmus eine Veränderung in der Speicherstruktur des Algorithmus umfassen, sodass dieser nach dem Öffnen der Datei verändert vorliegt und nicht wie vorher erkannt werden kann. Somit ist die Sicherheit des Algorithmus weiter erhöht.

Ist die Datei auf einem Medium gespeichert, auf das nicht geschrieben werden kann, so dass der Code der Datei nicht verändert werden kann, verhindert der Algorithmus ein Öffnen der Datei vollständig. In einer weiteren Ausgestaltung verhindert der Algorithmus zusätzlich, dass die Datei auf bestimmte Medien kopiert wird, indem ein Kopieren der Datei mit bestimmten Programmtypen, wie Brennprogrammen, nicht gestattet wird.

## Patentansprüche

1. Verfahren zur Zerstörung von Dateiinhalten einer Datei, umfassen die Schritte:
- Speichern der Datei in einem vorbestimmten Dateiformat;
- Integrieren eines Algorithmus in die Datei, zur Zerstörung von Dateiinhalten, aufweisend vorbestimmte Auslösekriterien, wobei ein erster Teil des Algorithmus in einen ersten Teil der Datei integriert wird, der beim Öffnen der Datei von einem ausführenden Betriebssystem oder von einem ausführenden Programm angesprochen wird;
- Prüfung der vorbestimmten Auslösekriterien, wenn die Datei geöffnet wird; und
- Zerstören von Dateiinhalten, wenn wenigstens ein vorbestimmtes Auslösekriterium erfüllt ist **gekennzeichnet durch**
- Verändern des integrierten Algorithmus, wenn die vorbestimmten Auslösekriterien nicht erfüllt sind, wobei das Verändern des integrierten Algorithmus eine Veränderung in der Speicherstruktur des integrierten Algorithmus umfasst, sodass dieser nach dem Öffnen der Datei verändert vorliegt und nicht wie vorher erkannt werden kann.

2. Verfahren nach Anspruch 1, wobei die vorbestimmten Auslösekriterien eine Prüfung eines oder mehrerer der folgenden Parameter umfassten: Datum; Zeitzone; Regionaldaten; Marke eines Geräts, auf dem die Datei geöffnet wird; Seriennummer eines Geräts, auf dem die Datei geöffnet wird; Zeitpunkt nach Öffnen der Datei; Kennung eines Benutzers eines Geräts, auf dem die Datei geöffnet wird.

3. Verfahren nach einem der Ansprüche 1 oder 2, wobei das Zerstören von Dateiinhalten ein Verändern von Bits eines Codes der Datei umfasst.

4. Verfahren nach einem der Ansprüche 1 bis 3, wobei das Zerstören von Dateiinhalten auf einem Zufallsalgorithmus basiert und die Zerstörung irreversibel ist.

5. Verfahren nach einem der Ansprüche 1 bis 4, wobei im Schritt des Zerstörens von Dateiinhalten ein informationsbehafteter Teil des Codes zerstört wird, so dass ein Informationsgehalt der Datei vernichtet wird.

6. Verfahren nach einem der Ansprüche 1 bis 5, wobei ein zweiter Teil des Algorithmus in einen zweiten Teil der Datei integriert wird und von dem ersten Teil des Algorithmus aufgerufen werden kann.

## Claims

1. Method for destroying file contents of a file, comprising the following steps:
- storing the file in a predefined file format;
- integrating an algorithm into the file, for destroying file contents, having predefined trigger criteria wherein a first part of the algorithm is integrated into a first part of the file which is called by an executing operating system or by an executing program when the file is opened;
- checking the predefined trigger criteria when the file is opened; and
- destroying file contents if at least one predefined trigger criterion is satisfied, **characterized by**
- modifying the integrated algorithm if the predefined trigger criteria are not satisfied, wherein modifying the integrated algorithm comprises a modification in the storage structure of the integrated algorithm so that it occurs in modified form after the opening of the file and cannot be recognized as before.

2. Method according to claim 1, wherein the predefined trigger criteria comprise a checking of one or more of the following parameters: date; time zone; regional data; make of a device on which the file is opened; serial number of a device on which the file is opened; time after opening the file; identifier of a user of a device on which the file is opened.

3. Method according to either of claims 1 and 2, wherein the destruction of file contents comprises a modification of bits of a code of the file.

4. Method according to one of claims 1 to 3, wherein the destruction of file contents is based on a random algorithm and the destruction is irreversible.

5. Method according to one of claims 1 to 4, wherein an information-bearing part of the code is destroyed in the step of destroying file contents, so that an information content of the file is destroyed.

6. Method according to one of claims 1 to 5, wherein a second part of the algorithm is integrated into a second part of the file and can be called by the first part of the algorithm.

## Revendications

1. Procédé de destruction du contenu d'un fichier, comprenant les étapes consistant à :
- enregistrer le fichier dans un format de fichier prédéterminé ;
- intégrer dans le fichier un algorithme de destruction du contenu du fichier, comportant des critères de déclenchement prédéterminés, dans lequel une première partie de l'algorithme est intégrée à une première partie du fichier, à laquelle une réponse est fournie lors de l'ouverture du fichier par un système d'exploitation en cours d'exécution ou par un programme en cours d'exécution ;
- vérifier les critères de déclenchement prédéterminés si le fichier est ouvert ; et
- détruire le contenu du fichier si au moins un critère de déclenchement est rempli, **caractérisé par** le fait de
- modifier l'algorithme intégré si les critères de déclenchement prédéterminés ne sont pas remplis, dans lequel la modification de l'algorithme intégré comprend une modification de la structure de mémoire de l'algorithme intégré de manière à ce que celui-ci soit présent à l'état modifié après l'ouverture du fichier et ne puisse pas être identifié comme auparavant.

2. Procédé selon la revendication 1, dans lequel les critères de déclenchement prédéterminés comprennent une vérification d'un ou plusieurs des paramètres suivants : date ; fuseau horaire ; données régionales ; marque d'un appareil sur lequel le fichier est ouvert ; numéro de série d'un appareil sur lequel le fichier est ouvert ; point dans le temps après l'ouverture du fichier ; identification d'un utilisateur d'un appareil sur lequel le fichier est ouvert.

3. Procédé selon l'une des revendications 1 ou 2, dans lequel la destruction du contenu du fichier comprend une modification de bits d'un code du fichier.

4. Procédé selon l'une des revendications 1 à 3, dans lequel la destruction du contenu du fichier est fondée sur un algorithme aléatoire et dans lequel la destruction est irréversible.

5. Procédé selon l'une des revendications 1 à 4, dans lequel, lors de l'étape de destruction du contenu du fichier, une partie du code contenant des informations est détruite de manière à ce qu'un contenu d'information du fichier soit effacé.

6. Procédé selon l'une des revendications 1 à 5 dans lequel une deuxième partie de l'algorithme est intégrée dans une deuxième partie du fichier et peut être appelée par la première partie de l'algorithme.
